(19) Europäisches Patentamt / European Patent Office / Office européen des brevets

(11) **EP 4 676 107 A1**

(12) **EUROPEAN PATENT APPLICATION**


(43) Date of publication:
**07.01.2026 Bulletin 2026/02**

(21) Application number: **24186973.4**

(22) Date of filing: **06.07.2024**

(51) International Patent Classification (IPC):
***H04W 8/22*** *(2009.01)* ***H04W 84/12*** *(2009.01)*

(52) Cooperative Patent Classification (CPC):
**H04W 84/12; H04L 63/1408; H04L 63/162; H04W 8/22;** G06F 21/552

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**



(71) Applicant: **Cujo LLC**
**Covina, CA 91723 (US)**

(72) Inventors:
- **Yaffe, Dorel**
  **6473118 Tel Aviv (IL)**
- **Kovelman, Gregory**
  **6473118 Tel Aviv (IL)**
- **Goulkarov, Shimon**
  **6473118 Tel Aviv (IL)**

(74) Representative: **TBK**
**Bavariaring 4-6**
**80336 München (DE)**


(54) **WI-FI ATTRIBUTES OF CONNECTED DEVICE**


(57) Wireless data transmissions from a plurality of connected devices of various device types to a plurality of access points are monitored (102). A set of Wi-Fi attributes and corresponding values are extracted (110) from the wireless data transmissions. A maximum set of Wi-Fi attributes and corresponding maximum values are generated (114) for a specific device type of the various device types based on the set of Wi-Fi attributes and corresponding values.

100 START
104 L2 HANDSHAKES
102 MONITOR WI-DATA-TXS FROM CONN-DEVS OF VARIOUS DEV-TYPES TO APS
106 PROBE-REQ-FRAMES
108 ASSOC-REQ-FRAMES
IN-RSP-TO
110 EXTRACT SET OF WI-FI ATTRS AND VALUES FROM WI-DATA-TXS
112 WI-FI RADIO-TRX-CAPA
IN-RSP-TO
114 GENERATE MAX SET OF WI-FI ATTRS AND MAX VALUES FOR SPEC-DEV-TYPE OF VARIOUS DEV-TYPES BASED ON SET OF WI-FI ATTRS AND VALUES
116 MAINTAIN DATA STRUCTURE COMPRISING MAX SET OF WI-FI ATTRS AND MAX VALUES FOR SPEC-DEV-TYPES
118 COMPLEMENT MAX SET OF WI-FI ATTRS AND MAX VALUES WITH DATA FROM DI-SUBSYS
120 TRAIN UNSUPERVISED ML-MOD TO RECOGNIZE WI-FI-TRX-TYPE OF CONN-DEVICE USING TRAINING DATASET COMPRISING SET OF WI-FI ATTRS AND VALUES AND MAX SET OF WI-FI ATTRS AND MAX VALUES
122 MONITOR CERT-WI-DATA-TX FROM CERT-CONN-DEV TO CERT-AP
124 RECOGNIZE CERT-DEV-TYPE OF CONN-DEV AS SPEC-DEV-TYPE
126 STORE ACTIVE VALUES OF ACTIVE SET OF WI-FI ATTRS OF CERT-CONN-DEV IN RELATION TO MAX SET OF WI-FI ATTRS AND MAX VALUES OF SPEC-DEV-TYPE
128
130 STOP

FIG. 1A

EP 4 676 107 A1

## Description

FIELD

The invention relates to a method, apparatus, computer program product, and computer-readable medium.

BACKGROUND

Wi-Fi® is based on the Institute of Electrical and Electronics Engineers (IEEE) 802.11 family of wireless network protocol standards. A connected device uses Wi-Fi to connect to a wireless access point for Internet access. In device identification, the connected device is detected and identified as it connects to a network through the access point. As a part of the device identification, a device fingerprint is generated to identify a connected device and its model as it connects to the network. The device fingerprint based on a network behavior may be used to identify the connected device even if its media (or medium) access control (MAC) address has been randomized. But to know Wi-Fi capabilities of connected devices would also be beneficial. Theoretically, supported maximal Wi-Fi capabilities of different device types may be collected manually from manufacturer specifications or regulatory reports such as reports of Federal Communications Commission (FCC). Such process is labor-intensive and not applicable to new or unknown device models.

SUMMARY

According to an aspect of the disclosure, there is provided subject matter of independent claims.
One or more examples of implementations are set forth in more detail in the accompanying drawings and the detailed description.

BRIEF DESCRIPTION OF DRAWINGS

Some examples will now be described with reference to the accompanying drawings, in which:

FIG. 1A and FIG. 1B are flowcharts illustrating examples of a method;
FIG. 2 is a block diagram illustrating an example implementation environment for the method;
FIG. 3 is a sequence chart illustrating an example communication between various actors of the method;
FIG. 4A and FIG. 4B are block diagrams illustrating examples of a cybersecurity apparatus;
FIG. 5 is a block diagram illustrating an example of a connected device;
FIG. 6 is a block diagram illustrating an example of a computing resource;
FIG. 7A and FIG. 7B are block diagrams illustrating examples of a customer-premises equipment;
FIG. 8 is a sequence chart illustrating another example communication between a connected device and an access point;
FIG. 9 illustrates an example of a probe request frame;
FIG. 10 illustrates another example of the method; and
FIG. 11 illustrates an example of training within the method.

DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.
Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

The device identification is not able to identify Wi-Fi attributes of the connected device and corresponding values. The set of Wi-Fi attributes of the connected device and corresponding values define capabilities of a Wi-Fi radio transceiver of the connected device.

The following method provides a way to derive this information in a fully automated way that supports all released connected device types in the market, and automatically updates with the release of new connected devices and device types without the need to access any external database. The method also supports cases, wherein the connected device model is unknown or cannot be easily identified to a sufficient resolution, as well as access points, which have a reduced set of capabilities compared to connected devices (i.e., the access point is of an old model whereas the connected device is of a new model).

In the method, wireless data transmissions between connected devices of various device types and access points are monitored, a set of Wi-Fi attributes and corresponding values are extracted from the monitored wireless data transmissions, and a maximum set of Wi-Fi attributes and corresponding maximum values are generated for different device types based on the set of Wi Fi attributes and corresponding values. With the maximum set of Wi-Fi attributes and corresponding maximum values it may be detected that some specific connected device is operating below its maximal performance (and also the percentage of the operation below the maximal performance may be determined). Another insight may be that connected devices with a specific Wi-Fi chipset do not use different Wi-Fi capabilities to the fullest.

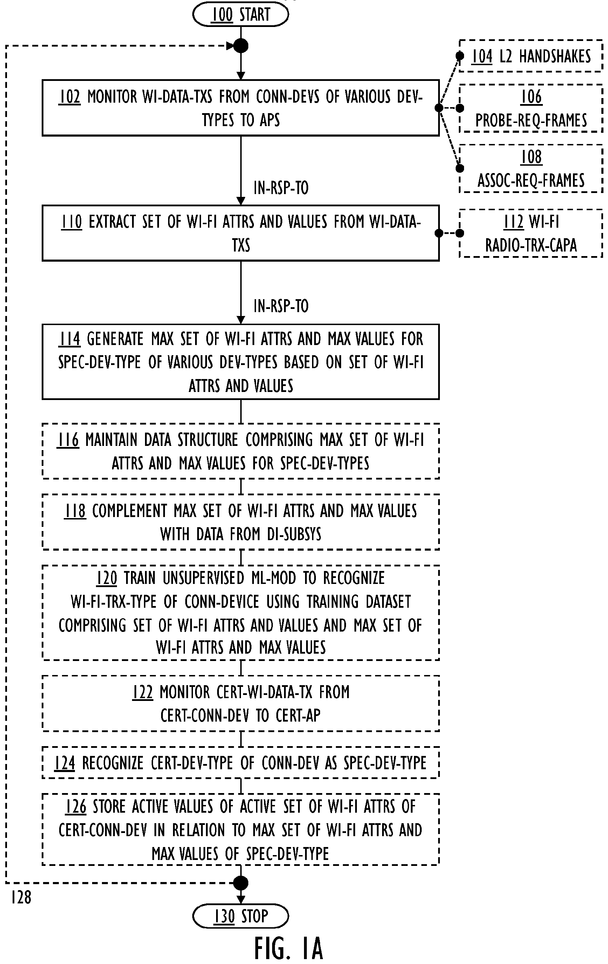

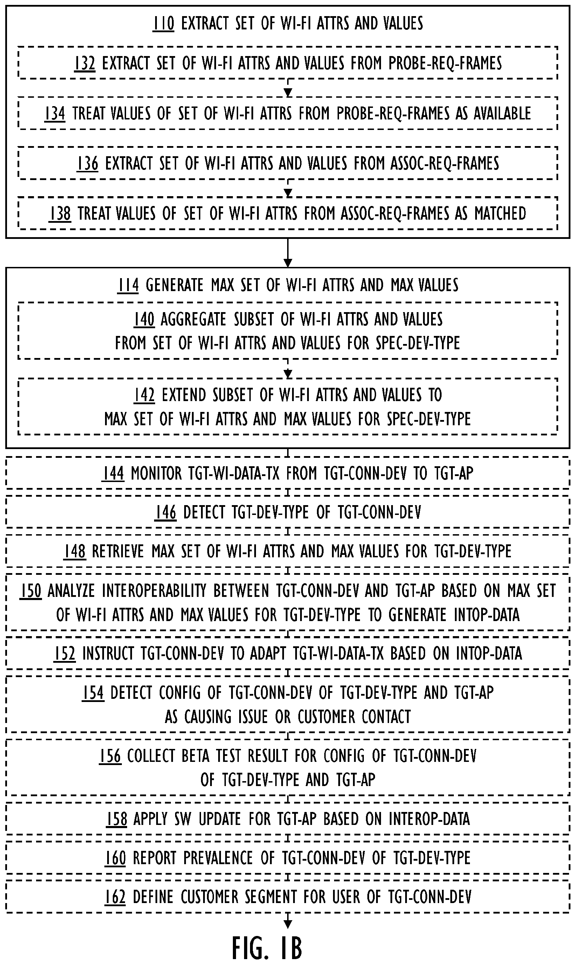

FIG. 1A and FIG. 1B are flowcharts illustrating examples of a method. The method performs operations related to identifying Wi-Fi attributes of the connected device and corresponding values. The method starts in 100 and ends in 130. The method may run in principle endlessly. The infinite running may be achieved by looping 128 back as shown in FIG. 1A.

The operations are not strictly in chronological order, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

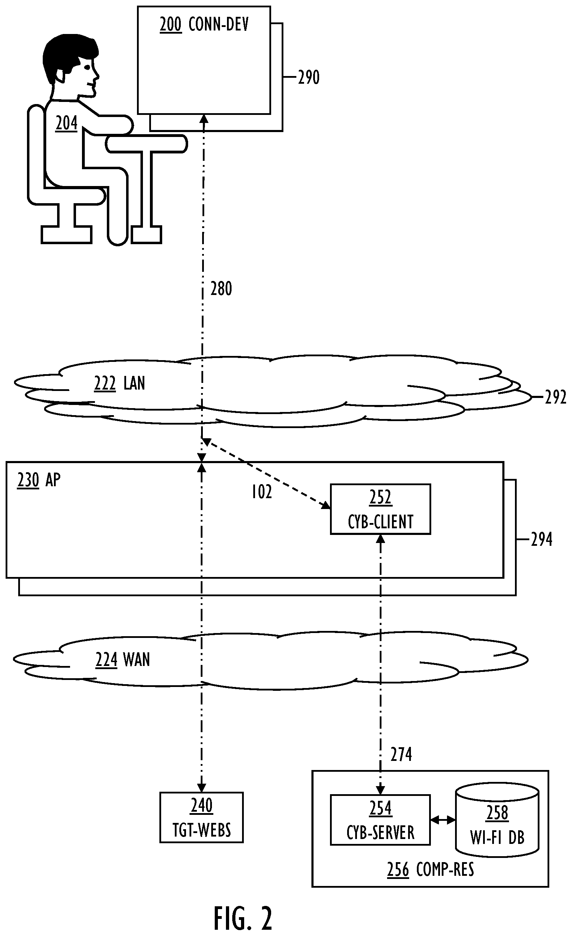

FIG. 2 is a block diagram illustrating an example implementation environment for the method. The method may be a computer-implemented method. The method may operate within an access point 230, but optionally also partly within a computing resource 256.

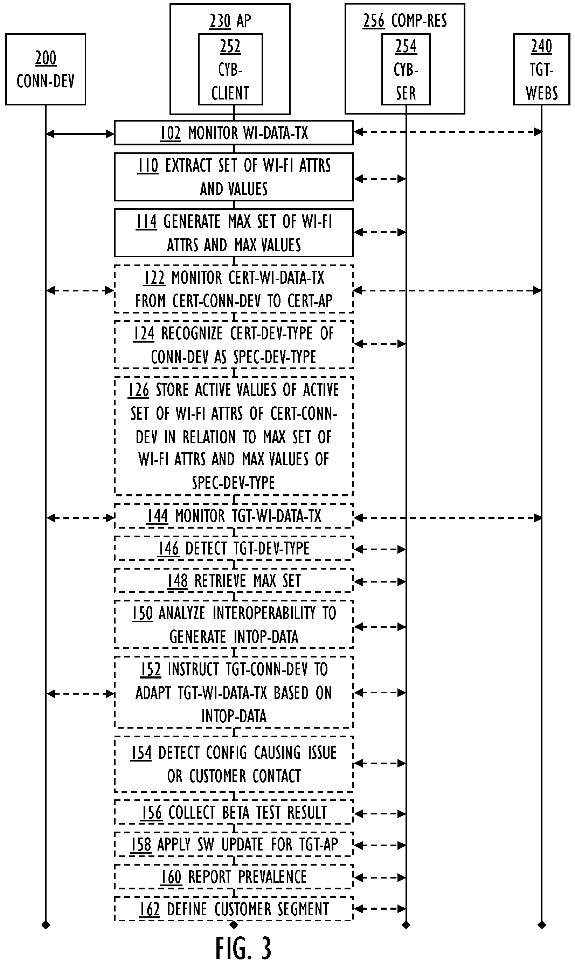

FIG. 3 is a sequence chart illustrating an example communication between various actors of the method.

Wireless data transmissions 280 from a plurality of connected devices 200, 290 of various device types to a plurality of access points 230, 294 are monitored 102. This may be implemented so that the wireless data transmissions 280 are monitored by the access point 230, 294 in its local area network (LAN) 222, 292.

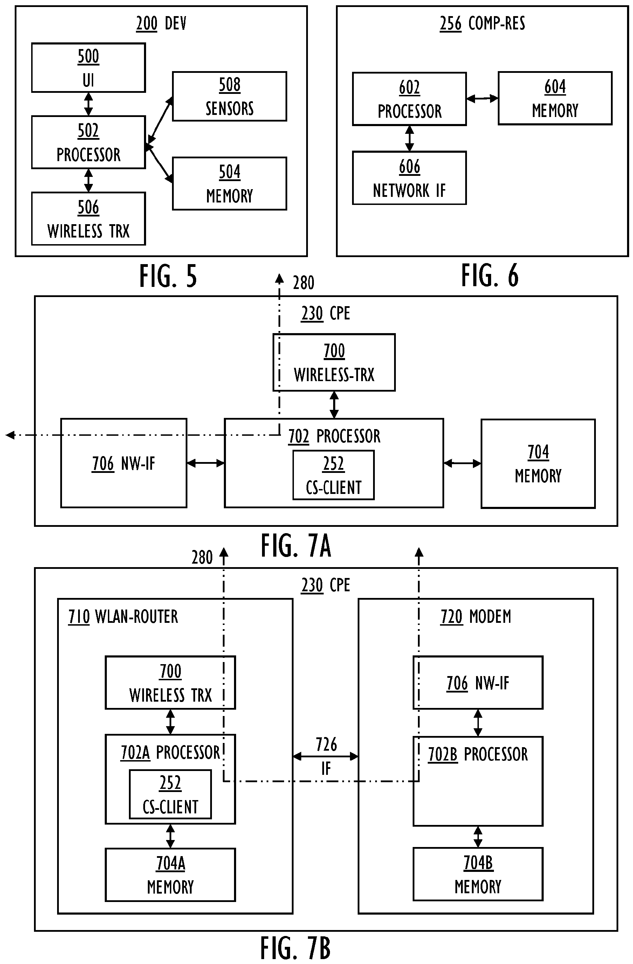

A set of Wi-Fi attributes and corresponding values are extracted 110 from the wireless data transmissions 280, 282. In an example, the set of Wi-Fi attributes define capabilities 112 of a Wi-Fi radio transceiver 506 (illustrated in FIG. 5) of the connected device 200, 290.

The set of Wi-Fi attributes may comprise one or more supported Wi-Fi generations, such as Wi-Fi 4, Wi-Fi 5, Wi-Fi 6, Wi-Fi 6E, Wi-Fi 7, and Wi-Fi 8, for example, without limiting the examples to these generations.

The set of Wi-Fi attributes may comprise one or more supported IEEE 802.11 standards, such as 802.11n, 802.11ac, 802.11ax, 802.11be, and 802.11bn.

Each Wi-Fi generation may be associated with the corresponding IEEE 802.11 standard: Wi-Fi 4 with 802.11n, Wi-Fi 5 with 802.11ac, Wi-Fi 6 with 802.11ax, Wi-Fi 6E with 802.11ax, Wi-Fi 7 with 802.11be, and Wi-Fi 8 with 802.11bn.

The set of Wi-Fi attributes may comprise one or more supported frequency bands, such as 2.4 GHz, 5 GHz, 6 GHz, and in the future eventually 7 GHz, 42.5 GHz, and 71 GHz.

Each 802.11 standard supports one or more frequency bands: 802.11n supports 2.4 GHz and 5 GHz, 802.11ac supports 5 GHz, 802.11ax supports 2.4 GHz and 5 GHz for Wi-Fi 6, 802.11ax supports 6 GHz for Wi-Fi 6E, 802.11be supports 2.4 GHz, 5 GHz, and 6 GHz, and 802.11bn may eventually support 2.4 GHz, 5 GHz, 6 GHz, 7 GHz, 42.5 GHz, and 71 GHz.

The set of Wi-Fi attributes may also comprise, all depending on the Wi-Fi generation or the underlying IEEE 802.11 standard, one or more of the following:

- a supported multiple-input and multiple-output (MIMO) configuration, such as a basic MIMO configuration and a supported multi-user MIMO (MU-MIMO) configuration;
- a frequency division multiple access (FDMA) support;
- an orthogonal FDMA (OFDMA) support;

- one or more supported Wi-Fi protected access modes, such as WPA, WPA2, and WPA3;
- one or more supported Wi-Fi roaming protocols, such as 802.11k, 802.11r, and 802.11v;
- a maximum physical data rate, such as 1200 Mbps;
- a maximum channel bandwidth, such as 20 MHz, 40 MHz, and 80 MHz;
- a maximum modulation coding scheme (MCS) index, whose values may range between 6.5 MCS and 1300 MCS, for example; and
- a dynamic frequency selection (DFS) support.

The set of Wi-Fi attributes may also comprise a Wi-Fi chipset vendor, such as Intel®, etc.

Note that one or more of these Wi-Fi attributes may be selected to the set of Wi-Fi attributes. The set of Wi-Fi attributes may comprise one or more supported Wi-Fi generations, and/or one or more supported IEEE 802.11 standards, and/or one or more supported frequency bands. Additionally, the set of Wi-Fi attributes may comprise one or more of the supported MIMO configuration, the FDMA support, the OFDMA support, one or more supported WPA modes, and the Wi-Fi chipset vendor. Furthermore, the set of Wi-Fi attributes may comprise one or more of one or more Wi-Fi roaming protocols, the maximum physical data rate, the maximum channel bandwidth, the maximum MCS index, and the DFS support.

As these various Wi-Fi attributes may fully or partially depend on each other, the logic for generating 114 the maximum set of Wi-Fi attributes and corresponding maximum values for a specific device type may take these interdependencies into account.

In an example, the wireless data transmissions 280 comprise layer 2 handshakes 104 of the plurality of connected devices 200, 290, and the set of Wi-Fi attributes and corresponding values are extracted 110 from the layer 2 handshakes.

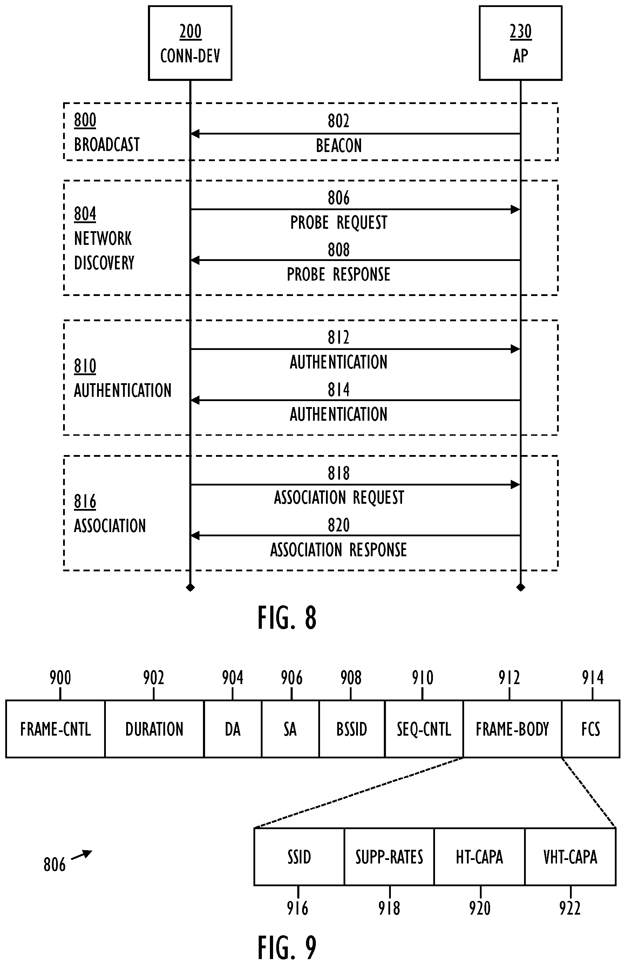

FIG. 8 is a sequence chart illustrating another example communication between the connected device 200 and the access point 230. In a broadcast phase 800, the access points 230 may transmit a beacon frame 802 advertising Wi-Fi attribute values of the access point 230.

In a network discovery phase 804, the connected device 200 transmits a probe request frame 806 to the access point 230, and the access point 230 responds with a probe response frame 808.

Wi-Fi clients of connected devices 200 have traditionally used an active hunt-and-seek method to scan for the access points 230. The connected device 200 sends out probe request frames 806 (at layer 2) per channel to discover the access points 230. The access points 230 each respond with a probe response frame 808, which contains all the necessary information for the connected device 200. The connected devices 200 use an active scanning method to send the probe request frames 806 across all available channels, but there is also a passive approach, where the access point 230 broadcasts the beacon frame 802.

In an example, the wireless data transmissions 280 comprise probe request frames 806 transmitted from the plurality of connected devices 200, 290. Extracting 110 the set of Wi-Fi attributes and corresponding values from the wireless data transmissions 280 may then be implemented by extracting 132 the set of Wi-Fi attributes and corresponding values from the probe request frames 806 of the wireless data transmissions 280, and treating 134 the values of the set of Wi-Fi attributes from the probe request frames 806 as available at the moment for the connected device 200.

The connected device 200 will sequentially send the probe request frames 806 on each of the supported channels. The connected device 200 already associated with the access point 230 (and receiving data) may temporarily go off-channel and continue sending probe request frames 806 every few seconds across other channels. The primary purpose of the off-channel probing is to enable the connected device 200 to find other access points 294 so that the connected device 200 may roam from the access point 230 to the other access point 294.

FIG. 9 illustrates an example of the probe request frame 806: a frame control field 900, a duration field 902, a destination address (DA) field 904, a source address (SA) field 906, a basic service set identity (BSSID) field 908, a sequence control field 910, a frame body 912, and a frame check sequence (FCS) field 914. The frame body 912 comprises a service set identifier (SSID) 916, a supported rates field 918, a high throughput (HT) capability field 920, and a very high throughput (VHT) capability field 922. The HT capability is defined in IEEE 802.11n standard for the Wi-Fi 4. The VHT capability is defined in IEEE 802.11ac standard for the Wi-Fi 5.

In an authentication phase 810, the connected device 200 and the access point 230 exchange authentication messages 812, 814.

In an association phase 816, the connected device 200 transmits an association request frame 818 to the access point 230, and the access point 230 responds with an association response frame 820.

In an example, the wireless data transmissions 280 comprise association request frames 108 transmitted from the plurality of connected devices 200, 290. Extracting 110 the set of Wi-Fi attributes and corresponding values from the wireless data transmissions 280 may then be implemented by extracting 136 the set of Wi-Fi attributes and corresponding values from the association request frames of the wireless data transmissions 280, and treating 138 the values of the set of Wi-Fi attributes from the association request frames as matched at the moment by the connected device 200 for advertised Wi-Fi attribute values of the access point 230.

A maximum set of Wi-Fi attributes and corresponding maximum values are generated 114 for a specific device type of the various device types based on the set of Wi-Fi attributes and corresponding values.

The maximum set of Wi-Fi attributes and corresponding maximum values defines a supported maximal configuration for each device type, and may be expressed with the following equation:

$$M[T, C] = max\ c\ for\ c_1,\dots c_n, \quad (1)$$

wherein $T$ is device type, C is Wi-Fi capability, and $c_1,\dots c_n$ are Wi-Fi capabilities observation.

In an example, generating 114 the maximum set of Wi-Fi attributes and corresponding maximum values for the specific device type of the various device types based on the set of Wi-Fi attributes and corresponding values may be implemented by aggregating 140 a subset of Wi-Fi attributes and corresponding values from the set of Wi-Fi attributes and corresponding values for the specific device type, and extending 142 the subset of Wi-Fi attributes and corresponding values to the maximum set of Wi-Fi attributes and corresponding maximum values for the specific device type. For example, the subset of the Wi-Fi attributes and corresponding values for the connected device 200 may contain the Wi-Fi 6 as the supported Wi-Fi generation based on the monitored 102 wireless data transmission 280 as the access point 230 only supports the Wi-Fi 6. However, because the connected device 200 supports the Wi-Fi generation Wi-Fi 6E, the Wi-Fi generation attribute value is extended 142 to the maximum value of Wi-Fi 6E.

The plurality of connected devices 200, 290 of the various device types may comprise a connected device of a previously unknown device type. With the described operations 102, 110, 114, the maximum set of Wi-Fi attributes and corresponding maximum values may be generated 114 also for such previously unknown device type. The previously unknown device type may be called a zero-day device, meaning that none of the access points 230, 294 have previously had a wireless connection with the zero-day device.

In an example, a certain wireless data transmission 280 from a certain connected device 200 to a certain access point 230 is monitored 122, a certain device type of the certain connected device 200 is recognized 124 as the specific device type, and active values of an active set of Wi-Fi attributes of the certain connected device 200 are stored 126 in relation to the maximum set of Wi-Fi attributes and corresponding maximum values of the specific device type. In this way, active values used by the certain connected device 200 may be stored 126 so that each active value of each Wi-Fi attribute may be compared to the maximum of value of each Wi-Fi attribute.

In an example, a data structure comprising the maximum set of Wi-Fi attributes and corresponding maximum values is maintained 116 for a plurality of specific device types, in a Wi-Fi attributes database 258, for example.

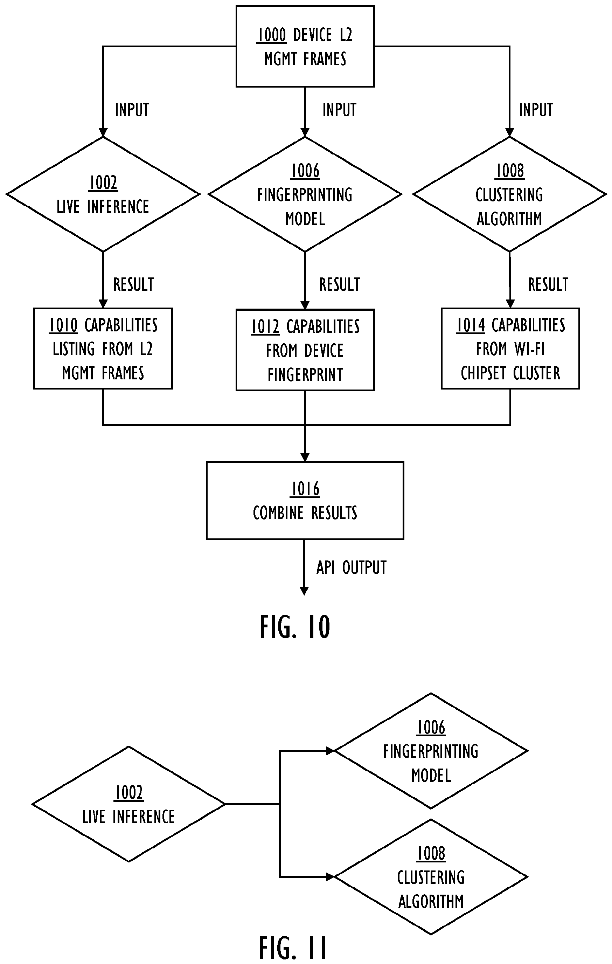

As illustrated in FIG. 10, the operations of the method described so far belong to the leftmost branch: device layer 2 management frames 1000 are inputted (by the monitoring 102) to a live inference block 1002, which then outputs a capabilities listing from the layer 2management frames 1010 (by the extracting 110 and the generating 114).

The live inference block 1002 collects 802.11 layer 2 level of handshake frames of connecting connected devices 200, 290 on a collection of Wi-Fi access points 230, 294 in real time and extracts the declared Wi-Fi capabilities and features of those connected devices 200, 290, aggregates them, and then extends them to the maximal set of capabilities for those connected devices 290. The live inference block 1010 may optionally receive device typing information for all or some of the said connecting client devices from a device typing sub-system in place.

In these probe request frames, the connected device 200, 290 provides the full set of capabilities available to the connected device at the moment - it may vary for example if the connected device 200, 290 is currently in a low power mode or a battery saving mode.

Capabilities across each device type will vary, depending on factors like the Wi-Fi chipset, the number of antennas, power mode (e.g. iOS Low Power Mode), age of the client, driver, supplier, etc.

Each connected device 200, 290 includes its capability details in the 802.11Wi-Fi management packets, these are layer 2 management frame with different types for different uses, one example is an association request frame for associating the connected device 200, 290 with Wi-Fi network 222, 292 it is connecting to. The association request frame is sent from the connected device 200, 290 to the access point 230, 294. By capturing the association request frame, it is possible to decode and report on the claimed capabilities of the connected device 200, 290 (acting as the Wi-Fi client).

However, in association requests the connected device 200, 290 will match the capabilities advertised by the access point 230, 294. For instance, a three-stream (3x3) Wi-Fi spatial stream connected device 200, 290 will tell a dual stream (2x2) Wi-Fi spatial stream access point 230, 294 that it only supports a dual stream.

This problem is addressed collecting both probe request frames and association request frames and matching between them based on the MAC address of the connected device 200, 290 across bands and the same service set identifier (SSID) that is the name assigned to the Wi-Fi network 222, 292 as the access point 230, 294 is set up. With this approach the capability set may be retrieved from the aggregated capabilities gather from all the frames (= probe request frames and association request frames).

In addition to the above, an active capabilities aggregation occurs basically whenever the first-seen usage of a capability set for the connected device 200, 290 is encountered. It is also possible to have a continuously tweakable telemetry over-time for which actual capabilities that are being used are compared to occasionally used and never used categories.

The live inference block 1010 may determine, per a specific connection of the connected device 200, 290 to the Wi-Fi network 222, 292, whether the maximal supported configuration for each Wi-Fi capability was used for this connected device, then aggregating that data in the active capabilities for later usage.

The device layer 2 management frames 1000 may also be inputted in a middle branch of FIG. 10 to a fingerprinting model block 1006, which then outputs capabilities from the device fingerprint 1012.

The fingerprinting model block 1006 may maintain a repository of the maximal supported Wi-Fi capabilities per each supported device type up to the specific model/stock keeping unit (SKU) resolution.

Leveraging the live inference 1002 with the radio frequency fingerprinting -based device identification 1006 to collect fingerprint of layer 2 parsed capabilities matched on typing resolution (may be device model specific, like iPhone® 14 Pro, or other resolution) across multiple frequency bands (2.4 GHz, 5 GHz, 6 Hz, for example), aggregating per connected device. Capabilities in results will be retrieved based on the lowest common denominator for the device typing resolution.

The fingerprinting model 1006 may be continuously updated to keep up in a supervised manner, and serves as a device capabilities store. The fingerprinting model 1006 is required in addition to the live inference 1002 to handle cases where the connected device 200, 290 does not present its full set of capabilities. For example, an iPhone® in a low power mode is reporting reduced capabilities, whereas we may infer from the device type that the iPhone® in fact has a broader set of capabilities. This is also relevant for a case where the access point 230, 294 does not support a specific frequency band (e.g., iPad Pro® on the 6 GHz band connecting to a Wi-Fi 6 access point), resulting in a partial capability listing based on the live inference 1002 unless cross-referenced with the other device fingerprinting data from the fingerprinting model 1006.

Additionally, an ongoing analysis of top popular connected devices will output fingerprints to be added manually to establish a coverage for major connected devices by the fingerprinting model 1006.

A combine results 1016 block may obtain the capabilities listing from the layer 2 management frames 1010 and the capabilities from the device fingerprint 1012. In an example, the combine results block 106 may be implemented so that the maximum set of Wi-Fi attributes and corresponding maximum values are complemented 118 with data from a device intelligence sub-system.

The device layer 2 management frames 1000 may also be inputted in a rightmost branch of FIG. 10 to a clustering algorithm block 1008, which then outputs capabilities from a Wi-Fi chipset cluster 1014.

The clustering algorithm block 1008 may provide a clustering algorithm, trained in an unsupervised approach on Wi-Fi chipset characteristics, which is agnostic to a specific device model, that outputs the most related chipset family or a set of capabilities related to that connected device 200, 290.

The clustering algorithm block 1008 may be trained in an unsupervised approach on chipset characteristics so that the algorithm is agnostic to a specific device model, and is based on Wi-Fi chipset capabilities. The clustering algorithm block 1008 may be used to solve the following use cases:

6E case: If 6E supported connected devices 200, 290 connect to <6E access points 230, 294, thus, then probe request frames in 6 GHz will not be available, the live inference block 1002 then not receiving the relevant 6E capabilities, and thus not knowing that the connected devices 200, 290 have the 6E capabilities. If the connected device 200 is matched by clustering of Wi-Fi chipset capabilities, the 6E support for the connected device 200 may be detected.

Windows Devices: Typically, there is no specific enough typing information to determine models of Windows connected devices 200, 290 as there may be multiple manufacturers, but the manufacturers are usually not the same as the Wi-Fi chipset vendor. So, matching on layer 2 fingerprinting 1006 is difficult, but using a clustering algorithm 1008, the Wi-Fi chipset cluster may be inferred for its capabilities. Clustering is based on capabilities set to create a chipset cluster. There are finite number of chipsets, a whole lot of connected devices, and unique enough combinations of identifiers to leverage the data. This approach is also future proof. Most of the information associated with the physical capabilities of the Wi-Fi chip is assumed to be unique enough for use in the clustering algorithm 1008.

The physical layer (or layer 1) characteristics of the Wi-Fi chipset may be analyzed in different categories such as an antenna category, a data rate category, and a bandwidth category. The 802.11 series standards may be consulted for the physical characteristics. The antenna category may include one or more of the following physical characteristics: an antenna pattern consistency, a very high throughput (VHT) link adaptation, a multi-user (MU) beamformer and beamformee, a number of sounding dimensions, a beamformee STS capability, a single user (SU) beamformer and beamformee, an Rx/Tx modulation coding scheme (MCS) map. The data rate category may include one or more of the following: a VHT supported MCS set, a low density parity check (LDCP), and a space-time block coding (STBC). The bandwidth category may include a short guard interval (GI) for an 80 MHz radio channel and a short GI for a 160 MHz radio channel, or for an 80 + 80 MHz radio channel, and/or a supported channel width set.

In an example, a machine learning model is trained unsupervised 120 to recognize a Wi-Fi radio transceiver type of the connected device 200 using a training dataset comprising the set of Wi-Fi attributes and corresponding values, and the maximum set of Wi-Fi attributes and corresponding maximum values. The machine learning model may be implemented as a neural network. The neural network is trained ("unsupervised training") to learn a structure of the dataset by providing unlabeled input data and identifying naturally occurring patterns in the dataset. In this way, new patterns and relationships in raw, unlabeled dataset may be detected, which is optimal for an exploratory data analysis and clustering tasks.

A combine results 1016 block may then additionally obtain the capabilities from the Wi-Fi chipset cluster 1014, which may then be combined with the capabilities listing from the layer management frames 1010 and/or the capabilities from the device fingerprint 1012.

FIG. 11 illustrates an example of training within the method: the live inference block 1002 may be used to train the fingerprinting model block 1006, and/or the clustering algorithm block 1008.

In an example, a target wireless data transmission 280 from a target connected device 200 to a target access point 230 is monitored 144, a target device type of the target connected device 200 is detected 146, a maximum set of Wi-Fi attributes and corresponding maximum values for the target device type are retrieved 148, and interoperability between the target connected device 200 and the target access point 230 is analyzed 150 based on the maximum set of Wi-Fi attributes and corresponding maximum values for the target device type to generate interoperability data.

In an example, the target connected device 200 is instructed 152 to adapt the target wireless data transmission 280 based on the interoperability data.

In an example, a configuration of the target connected device 200 of the target device type and the target access point 230 is detected 154 as causing an issue or a customer contact. In this way, the compatibility between the connected devices 200, 290 and the CPE 230 in a household may be improved.

In an example, a beta test result is collected 156 for the configuration of the target connected device 200 of the target device type and the target access point 230.

In an example, a software update is applied 158 for the target access point 230 based on the interoperability data.

In an example, a prevalence of the target connected device 200 of the target device type is reported 160.

In an example, a customer segment (such as techies, casual users, etc.) is defined 162 for a user 204 of the target connected device 200 based on the (retrieved) maximum set of Wi-Fi attributes and corresponding maximum values for the target device type.

As used herein, the term "connected device" 200 refers to a physical device with communication capabilities.

As used herein, the term "access point" 230 refers to a physical device providing a local area network 222 for the connected device 200, and an access for the connected device 200 to a wide area network (WAN) 224 such as the Internet.

The wireless data transmission 280 is transferred over a wireless connection between the connected device 200 and the access point 230. The connection is first established between the connected device 200 and the access point 230. Next, the wireless data transmission 280 may extend from the connected device 200 via the LAN 222 and WAN 224 to a target website 240 using a Hypertext Transfer Protocol/Hypertext Transfer Protocol Secure (HTTP/HTTPS) connection. The establishment of the HTTP/HTTPS connection may also require a wireless data transmission with a domain name system (DNS) server (not illustrated in FIG. 1A).

In an example, a local area network 222 may be implemented by a customer-premises equipment (CPE) acting as the access point 230. The CPE 230 may implement the local area network (LAN) 222 between the connected device 200 and the CPE 230. The LAN 222 is a wireless network, which enables the wireless connection between the CPE 230 and the connected device 200. The CPE 230 also provides an access to the WAN 224. In the wireless connection, data packets may be transferred from and to the connected device 200. In an example, the CPE 230 is configured to generate a wireless non-cellular internet access network 222. The CPE 230 may be configured to operate at a home or an office of a user 204 of the connected device 200. But the access point 230 may also be configured to operate out of the home or the office of the user 204 as a hotspot serving the connected devices 200 in a public place such as a cafe, city center, shopping mall, airport, an arena, etc.

Next, let us study how a cybersecurity operator is capable of monitoring the wireless data transmission 280.

First, the wireless connection between the connected device 200 and the access point 230 is monitored 102. A website access application (not illustrated in FIG. 2) running in the connected device 200 may seek to establish a connection to a target website 240, for example. As shown in FIG. 2, the connection between the connected device 200 and the access point 202 is routed through an access of the WAN 224 to the target website 240 to implement the wireless data transmission 280.

Monitoring 102 the wireless data transmission 280 between the connected device 200 and the access point 230 may further comprise monitoring the wireless data transmission 280 in the local area network 222 implemented by the CPE as the access point 230.

The connected devices 200 (such as user devices or Internet of Things (IoT) devices) use websites for various operations. A user 204 of the (user) connected device 200 may use a browser to browse webpages of a website 240, to view media content provided on the webpages, for example. The (IoT) connected device 200 may upload sensor data gathered by one or more sensors onboard the connected device 200 to the website 240, for example. The connected device 200 may download a software update from the website 240, for example. Numerous other well-known operations related to the websites 240 may also be performed by the connected device 200.

The connected device 200 may be configured to execute the website access application, such as web user interface application (a web browser, for example), or a stand-alone application (a mobile app, for example), and as a result, the wireless data transmission 280 from the connected device 200 to an accessed website 240 via the LAN 222 and the WAN 224 is performed. The website access application may automatically cause the wireless data transmission 280, or, alternatively, the wireless data transmission 280 may be generated as a result of an action by a user 204 through user interface controls of the website access application.

The connected device 200 may create the connection using a packet protocol from the website access application of the connected device 200 to the target website 240. The target website 240 may host a server application enabling access by the website access application. The packet protocols include, but are not limited to, Transmission Control Protocol/Internet Protocol (TCP/IP), User Datagram Protocol/Internet Protocol (UDP/IP), and OUIC, which establishes a multiplexed transport on top of the UDP. Various Hypertext Transfer Protocol/Hypertext Transfer Protocol Secure (HTTP/HTTPS) requests may then be transferred in the wireless data transmission 280 (using TCP streams or UDP datagrams, for example). In the Internet Protocol suite, the wireless data transmission 280 is operated in a link layer, an internet layer, and a transport layer, and the requests transmitted in the wireless data transmission 280 are operated in an application layer.

As used herein, the term "monitoring" refers to user-approved lawful interception or monitoring of the wireless data transmission 280 with a purpose and goal of increasing cybersecurity related to the connected device 200 and its operating environment. As the radio signal of the wireless data transmission 280 is monitored, the wireless data transmission 280 is accessed and collected between the transmitting device and the receiving device. The wireless data transmission 280 may be monitored even if the digital data transmission units (such as messages) of the wireless data transmission 280 are addressed to the receiving device (such as the access point 230, or the target website 240). The monitoring may be implemented so that the wireless data transmission 280 is passively monitored, i.e., the wireless data transmission 280 is not affected by the monitoring. Alternatively, if needed, the monitoring may include a seizing of the wireless data transmission 280, i.e., the wireless data transmission 280 is actively influenced so that a connection and/or requests and/or responses are blocked until it may be decided whether a cybersecurity action (such as blocking of the wireless data transmission 280) is required.

As used herein, the term "wireless data transmission" refers to the transmission and/or reception of (digital) data between the connected device 200 and the access point 230. The wireless data transmission 280 is transferred using digital data transmission units over a communication medium such as one or more communication channels between the connected device 200 and another network node such as the access point 230 or the target website 240. Besides over radio interface in the LAN 222, the data may be conveyed over another transmission medium (implemented by copper wires, or optical fibers, for example) in the WAN 224. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200 and other network nodes to implement the successful and reliable wireless data transmission 280. The communication protocols may implement a protocol stack with different conceptual protocol layers.

The wireless data transmission 280 may be monitored 102 by a cybersecurity client 252 operating in the access point 230. The wireless data transmission 280 may be accessed and collected by the cybersecurity client 252. The cybersecurity client 252 may also access a data structure related to the wireless data transmission 280 established and maintained at the CPE 230 after a successful handshake sequence between the connected device 200 and the CPE 230. The monitored wireless data transmission 280 may be analyzed in order to perform an appropriate cybersecurity operation by the cybersecurity client 252, possibly augmented by a cybersecurity server 254 operating in a networked computing resource 256. Machine learning algorithms may use a number of other data items (such as device-specific unique radio interface characteristics, and other active and historic unique identifiers related to the connected device 200 and its communication) to enable the device identification.

The WAN such as the Internet 224 uses the Internet Protocol suite including TCP/IP and UDP/IP to globally connect computer networks so that communication is enabled between connected devices 200 and various Internet services provided typically by websites 240. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by a browser or another application (such as a mobile app) running in the connected device 200.

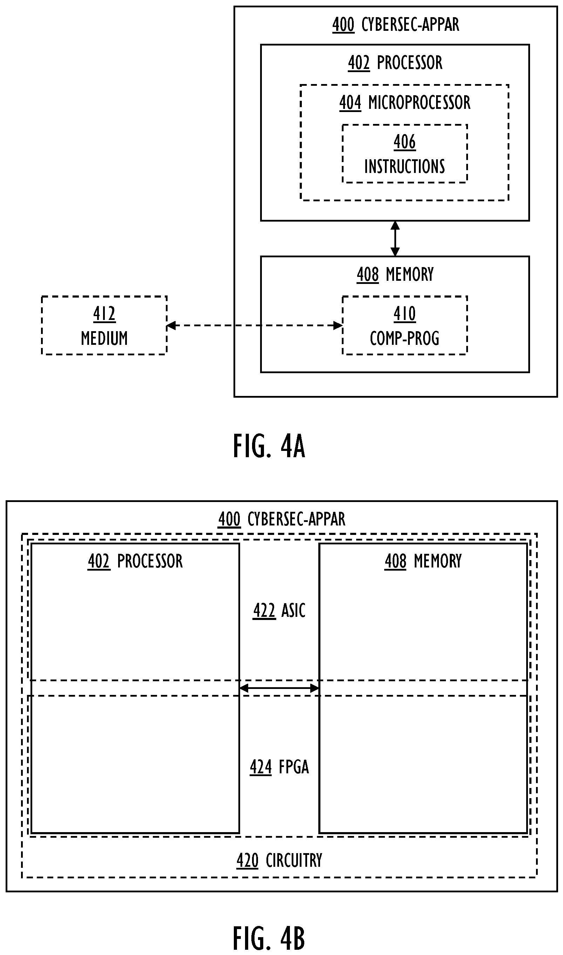

FIG. 4A and FIG. 4B are block diagrams illustrating examples of a cybersecurity apparatus 400. The method described with reference to FIG. 1A and FIG. 1B may be implemented by the cybersecurity apparatus 400. The apparatus 400 may execute the operations defined in the method. The apparatus 400 may implement an algorithm, which includes the operations of the method, but may optionally include other operations related to the cybersecurity in general. Note that the method described with reference to FIG. 1A and FIG. 1B may be implemented as a part of the cybersecurity client 252 running in the CPE 230 (or access point) as shown in FIG. 2. As shown in FIG. 2, the cybersecurity apparatus 400 may comprise various distributed actors 252, 254 communicatively coupled 274 with each other.

The cybersecurity apparatus 400 comprises one or more memories 408, and one or more processors 402 coupled to the one or more memories 408 configured to execute the operations described in FIG. 1A and FIG. 1B.

The term "processor" 402 refers to a device that is capable of processing data. The term "memory" 408 refers to a device that is capable of storing data run-time (= working memory) or permanently (= non-volatile memory).

As shown in FIG. 4A, the one or more processors 402 may be implemented as one or more microprocessors 404, which are configured to execute instructions 406 of a computer program 410 stored on the one or memories 408. The microprocessor 404 implements functions of a central processing unit (CPU) on an integrated circuit. The CPU is a logic machine executing the instructions 406 of the computer program 410. The CPU may comprise a set of registers, an arithmetic logic unit (ALU), and a control unit (CU). The control unit is controlled by a sequence of the instructions 406 transferred to the CPU from the (working) memory 408. The control unit may contain a number of microinstructions for basic operations. The implementation of the microinstructions may vary, depending on the CPU design. The one or more microprocessors 404 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 508 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 410 may be written ("coded") by a suitable programming language, and the resulting executable code may be stored in the memory 408 and executed by the one or more microprocessors 404.

The computer program 410 implements the method/algorithm. The computer program 410 may be coded using a programming language, which may be a high-level programming language, such as Go, Java, C, or C++, or with a low-level programming language, such as an assembler or a machine language. The computer program 410 may be in source code form, object code form, executable file, or in some intermediate form, but for use in the one or more microprocessors 404 it is in an executable form as an application. There are many ways to structure the computer program 410: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 410 for performing a wide variety of standard operations. In addition, an operating system (such as a general-purpose operating system) may provide the computer program 410 with system services.

As shown in FIG. 4A, a computer-readable medium 412 may store the computer program 410, which, when executed by the apparatus 400 (the computer program 410 may first be loaded into the one or more microprocessors 404 as the instructions 406 and then executed by one or more microprocessors 404), causes the apparatus 400 (or the one or more microprocessors 404) to carry out the method/algorithm. The computer-readable medium 412 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 410 to the one or memories 408 of the apparatus 400. In some jurisdictions, depending on the legislation and the patent practice, the computer-readable medium 412 may not be the wired or wireless telecommunications signal. The computer program 410 may be implemented as a computer program product comprising instructions which, when executed by the apparatus 400, cause the apparatus 400 to carry out the method.

As shown in FIG. 4B, the one or more processors 402 and the one or more memories 408 may be implemented by a circuitry 420. A non-exhaustive list of implementation techniques for the circuitry 420 includes, but is not limited to application-specific integrated circuits (ASIC) 422, field-programmable gate arrays (FPGA) 424, application-specific standard products (ASSP), standard integrated circuits, logic components, and other electronics structures employing custom-made or standard electronic circuits.

Note that in modern computing environments a hybrid implementation employing both the microprocessor technology of FIG. 4A and the custom or standard circuitry of FIG. 4B is feasible.

Functionality of the apparatus 400, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

The monitoring 102 of the wireless data transmission 280 is performed in connection with the access point 230, such as by the cybersecurity client 252. The extracting 110 of the set of Wi-Fi attributes and corresponding values, and the generating 114 of the maximum set of Wi-Fi attributes and corresponding maximum values may be performed by the cybersecurity client 252, and/or by the cybersecurity server 254. The cybersecurity server 254 may be coupled to a Wi-Fi attributes database 258 for the purpose of storing the maximum se of the Wi-Fi attributes and corresponding maximum values, and other data processed by the method. The cybersecurity client 252 may be provided a local cache storing at least part of the Wi-Fi attributes database 258.

FIG. 5 is a block diagram illustrating an example of the connected device 200. The connected device 200 may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, another kind of ubiquitous computing device, or some other type of a wired or wireless mobile or stationary communication device operating with or without a subscriber identification module (SIM) or an embedded SIM (eSIM). The connected device 200 may be a personal communication device of the user 204. The connected device 200 may also be an IoT device, which is provided with processing and communication technology and may also include one or more sensors and a user interface, and may be a stand-alone device, or an embedded device in a lighting fixture, thermostat, home security system, camera, smart lock, smart doorbell, smart refrigerator, or another household appliance, heating and cooling system, home and building automation system, vehicle, health and fitness monitor, remote health monitoring system, environmental sensor, IP camera, or network attached storage (NAS), etc.

The connected device 200 comprises one or more memories 504, and one or more processors 502 coupled to the one or more memories 504 configured to carry out a functionality of the connected device 200. In addition, the connected device 200 comprises a user interface 500 (such as a touch screen or one or more LEDs), and one or more wireless transceivers 506 (such as a WLAN transceiver, a cellular radio network transceiver, and a short-range radio transceiver), and also one or more sensors 508.

FIG. 6 is a block diagram illustrating an example of a computing resource 256 such as a server apparatus. The server apparatus 256 may be a networked computer server, which interoperates with the CPE 230 according to a client-server architecture, a cloud computing architecture, a peer-to-peer system, or another applicable distributed computing architecture. As shown in FIG. 6, the server apparatus 256 comprises one or more memories 604, and one or more processors 602 coupled to the one or more memories 604 configured to carry out the functionality of the cybersecurity server 254. In addition, the server apparatus 256 comprises a network interface (such as an Ethernet network interface card) 606 configured to couple the server apparatus 256 to the Internet 224.

FIG. 7A and FIG. 7B are block diagrams illustrating examples of the CPE 230. The access point 230 may comprise similar structures and functions.

The CPE 230 is located at home or office of a user 204 of the connected device 200. The CPE 230 is stationary equipment connected to a telecommunication circuit of a carrier (such as a network service provider (NSP) offering internet access using broadband or fixed wireless technologies) at a demarcation point. The demarcation point may be defined as a point at which the public Internet 224 ends and connects with the LAN 222 at the home or office. In this way, the CPE 230 acts as a network bridge, and/or a router.

The CPE 230 may include one or more functionalities of a router, a network switch, a residential gateway (RGW), a fixed mobile convergence product, a home networking adapter, an Internet access gateway, or another access product distributing the communication services locally in a residence or in an enterprise via a (typically wireless, but it may also additionally or alternatively be wired) LAN 222 and thus enabling the user 204 of the connected device 200 to access communication services of the NSP, and the Internet 224. Note that the CPE 230 may also be implemented with wireless technology, such as a 4G or 5G CPE 230 configured to exchange a 5G cellular radio network signal with the WAN 224 of a base station operated by the broadband service provider, and generate a Wi-Fi® (or WLAN) or wired signal to implement the LAN 222 to provide access for the connected device 200. Furthermore, the 4G/5G CPE 230 performs the conversion between the 4G/5G cellular radio network signal and the Wi-Fi® or wired signal.

In FIG. 7A, the CPE 230 is an integrated apparatus comprising one or more memories 704, and one or more processors 702 coupled to the one or more memories 704 configured to carry out a part of the method/algorithm in some examples. Additionally, the CPE 230 comprises a wireless radio transceiver 700 configured to create the LAN 222 for enabling access by the connected device 200. The CPE 230 also comprises a network interface 706 to act as a modem configured to connect to the telecommunication circuit of the carrier at the demarcation point, i.e., to the WAN 224. The network interface 706 may operate as a Digital Subscriber Line (DSL) modem using different variants such as Very high bitrate DSL (VDSL), Symmetric DSL (SDSL), or Asymmetric DSL (ADSL). The network interface 706 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA®), the Multimedia Terminal Adapter (MTA), and the fourth generation (4G), fifth generation (5G), or even a higher generation cellular radio network access technology. The CPE 230 may be running the cybersecurity client 252.

In FIG. 7B, the CPE 230 is a two-part apparatus. A WLAN router part 710 comprises the one or more memories 704A, the one or more processors 702A coupled to the one or more memories 704A configured to carry out the method/algorithm, and the wireless transceiver 700 to create the LAN 222 for enabling access by the connected device 200. A modem part 720 comprises the one or more processors 702B coupled to one or more memories 704B configured to carry out modem operations, and the network interface 706 to act as the modem configured to connect to the WAN 224. The WLAN router part 710 may be purchased by the user 204 of the connected device 200 to gain access to a part of the method/algorithm, whereas the modem part 720 may be provided by a carrier providing the telecommunication circuit access. As shown in FIG. 7B, the WLAN router part 710 and the modem part 720 may be communicatively coupled by an interface 726 (such as a wired Ethernet interface). As shown in FIG. 7B, the platform may be provided by the one or more memories 704A, and the one or more processors 702A, but also additionally, or alternatively, by the one or more memories 704B, and the one or more processors 702B. Instead of the cybersecurity client 252, another component running on the CPE 230 may be configured to run a part of the algorithm implementing the method in some examples.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt®), which is an open-source project for embedded operating systems of the CPE 230 based also on Linux. At the time of writing of this patent application, more information regarding the OpenWrt® may be found in openwrt.org.

As can be understood by the person skilled in the art, the method/algorithm operations may in part be distributed among the distributed software comprising the cybersecurity client 252, and the cybersecurity server 254 in different configurations. In an example, the cybersecurity client 252 communicates 274 with the cybersecurity server 254 to implement the method/algorithm functionality.

Thus, the cybersecurity client 252 may comprise a stand-alone fashion to carry out the method/algorithm, or a part of the functionality augmented by the functionality of the cybersecurity server 254. The cybersecurity client 252 may operate as a frontend with a relatively limited resources as regards to the processor and memory, whereas the cybersecurity server 254 may operate as a backend with a relatively unlimited resources as regards to the processor and memory, and the capability to serve a very large number of the connected devices 200 simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

**1.** A computer-implemented method comprising:

monitoring (102) wireless data transmissions from a plurality of connected devices of various device types to a plurality of access points;
extracting (110) a set of Wi-Fi attributes and corresponding values from the wireless data transmissions; and
generating (114) a maximum set of Wi-Fi attributes and corresponding maximum values for a specific device type of the various device types based on the set of Wi-Fi attributes and corresponding values.

**2.** The method of claim 1, wherein generating (114) the maximum set of Wi-Fi attributes and corresponding maximum values for the specific device type of the various device types based on the set of Wi-Fi attributes and corresponding values further comprises:

aggregating (140) a subset of Wi-Fi attributes and corresponding values from the set of Wi-Fi attributes and corresponding values for the specific device type; and
extending (142) the subset of Wi-Fi attributes and corresponding values to the maximum set of Wi-Fi attributes and corresponding maximum values for the specific device type.

**3.** The method of any preceding claim, further comprising:
maintaining (116) a data structure comprising the maximum set of Wi-Fi attributes and corresponding maximum values for a plurality of specific device types.

**4.** The method of any preceding claim, wherein the set of Wi-Fi attributes defines capabilities (112) of a Wi-Fi radio transceiver of a connected device.

**5.** The method of any preceding claim, wherein the set of Wi-Fi attributes comprises one or more of the following: one or more supported Wi-Fi generations, one or more supported Institute of Electrical And Electronics Engineers, IEEE, 802.11 standards, one or more supported frequency bands, a supported multiple-input and multiple-output, MIMO, configuration, a frequency division multiple access, FDMA, support, an orthogonal FDMA, OFDMA, support, one or more supported Wi-Fi protected access, WPA, modes, one or more supported Wi-Fi roaming protocols, a maximum physical data rate, a maximum channel bandwidth, a maximum modulation coding scheme, MCS, index, a dynamic frequency selection, DFS, support, and a Wi-Fi chipset vendor.

**6.** The method of any preceding claim, wherein the plurality of connected devices of the various device types comprises a connected device of a previously unknown device type.

**7.** The method of any preceding claim, further comprising:
complementing (118) the maximum set of Wi-Fi attributes and corresponding maximum values with data from a device intelligence sub-system.

**8.** The method of any preceding claim, further comprising:
training (120) unsupervised a machine learning model to recognize a Wi-Fi radio transceiver type of a connected device using a training dataset comprising the set of Wi-Fi attributes and corresponding values, and the maximum set of Wi-Fi attributes and corresponding maximum values.

**9.** The method of any preceding claim, further comprising:

monitoring (122) a certain wireless data transmission from a certain connected device to a certain access point;
recognizing (124) a certain device type of the certain connected device as the specific device type; and
storing (126) active values of an active set of Wi-Fi attributes of the certain connected device in relation to the maximum set of Wi-Fi attributes and corresponding maximum values of the specific device type.

**10.** The method of any preceding claim, wherein the wireless data transmissions comprise layer 2 handshakes (104) of the plurality of connected devices.

**11.** The method of any preceding claim, wherein the wireless data transmissions comprise probe request frames (106) transmitted from the plurality of connected devices, and wherein extracting (110) the set of Wi-Fi attributes and corresponding values from the wireless data transmissions further comprises:

extracting (132) the set of Wi-Fi attributes and corresponding values from the probe request frames of the wireless data transmissions; and
treating (134) the corresponding values of the set of Wi-Fi attributes from the probe request frames as available at the moment for a connected device.

**12.** The method of any preceding claim, wherein the wireless data transmissions comprise association request frames (108) transmitted from the plurality of connected devices, and wherein extracting (110) the set of Wi-Fi attributes and corresponding values from the wireless data transmissions further comprises:

extracting (136) the set of Wi-Fi attributes and corresponding values from the association request frames of the wireless data transmissions; and
treating (138) the values of the set of Wi-Fi attributes from the association request frames as matched at the moment by a connected device for advertised Wi-Fi attribute values of an access point.

**13.** The method of any preceding claim, further comprising:

monitoring (144) a target wireless data transmission from a target connected device to a target access point;
detecting (146) a target device type of the target connected device;
retrieving (148) a maximum set of Wi-Fi attributes and corresponding maximum values for the target device type; and
analyzing (150) interoperability between the target connected device and the target access point based on the maximum set of Wi-Fi attributes and corresponding maximum values for the target device type to generate interoperability data.

**14.** The method of claim 13, further comprising:
instructing (152) the target connected device to adapt the target wireless data transmission based on the interoperability data.

**15.** The method of claim 13, further comprising one or more of the following:

detecting (154) a configuration of the target connected device of the target device type and the target access point as causing an issue or a customer contact;
collecting (156) a beta test result for the configuration of the target connected device of the target device type and the target access point;
applying (158) a software update for the target access point based on the interoperability data;
reporting (160) a prevalence of the target connected device of the target device type; and
defining (162) a customer segment for a user of the target connected device based on the maximum set of Wi-Fi attributes and corresponding maximum values for the target device type.

**16.** An apparatus (400) comprising means for carrying out the method of any preceding claim 1-15.

**17.** A computer program product (410) comprising instructions which, when executed by an apparatus, cause the apparatus to carry out the method of any preceding claim 1-15.

**18.** A computer-readable medium (412) comprising a computer program with instructions which, when executed by an apparatus, cause the apparatus to carry out the method of any preceding claim 1-15.

100 START
102 MONITOR WI-DATA-TXS FROM CONN-DEVS OF VARIOUS DEV-TYPES TO APS
104 L2 HANDSHAKES
106 PROBE-REQ-FRAMES
108 ASSOC-REQ-FRAMES
IN-RSP-TO
110 EXTRACT SET OF WI-FI ATTRS AND VALUES FROM WI-DATA-TXS
112 WI-FI RADIO-TRX-CAPA
IN-RSP-TO
114 GENERATE MAX SET OF WI-FI ATTRS AND MAX VALUES FOR SPEC-DEV-TYPE OF VARIOUS DEV-TYPES BASED ON SET OF WI-FI ATTRS AND VALUES
116 MAINTAIN DATA STRUCTURE COMPRISING MAX SET OF WI-FI ATTRS AND MAX VALUES FOR SPEC-DEV-TYPES
118 COMPLEMENT MAX SET OF WI-FI ATTRS AND MAX VALUES WITH DATA FROM DI-SUBSYS
120 TRAIN UNSUPERVISED ML-MOD TO RECOGNIZE WI-FI-TRX-TYPE OF CONN-DEVICE USING TRAINING DATASET COMPRISING SET OF WI-FI ATTRS AND VALUES AND MAX SET OF WI-FI ATTRS AND MAX VALUES
122 MONITOR CERT-WI-DATA-TX FROM CERT-CONN-DEV TO CERT-AP
124 RECOGNIZE CERT-DEV-TYPE OF CONN-DEV AS SPEC-DEV-TYPE
126 STORE ACTIVE VALUES OF ACTIVE SET OF WI-FI ATTRS OF CERT-CONN-DEV IN RELATION TO MAX SET OF WI-FI ATTRS AND MAX VALUES OF SPEC-DEV-TYPE
128
130 STOP

FIG. 1A

110 EXTRACT SET OF WI-FI ATTRS AND VALUES

132 EXTRACT SET OF WI-FI ATTRS AND VALUES FROM PROBE-REQ-FRAMES

134 TREAT VALUES OF SET OF WI-FI ATTRS FROM PROBE-REQ-FRAMES AS AVAILABLE

136 EXTRACT SET OF WI-FI ATTRS AND VALUES FROM ASSOC-REQ-FRAMES

138 TREAT VALUES OF SET OF WI-FI ATTRS FROM ASSOC-REQ-FRAMES AS MATCHED

114 GENERATE MAX SET OF WI-FI ATTRS AND MAX VALUES

140 AGGREGATE SUBSET OF WI-FI ATTRS AND VALUES FROM SET OF WI-FI ATTRS AND VALUES FOR SPEC-DEV-TYPE

142 EXTEND SUBSET OF WI-FI ATTRS AND VALUES TO MAX SET OF WI-FI ATTRS AND MAX VALUES FOR SPEC-DEV-TYPE

144 MONITOR TGT-WI-DATA-TX FROM TGT-CONN-DEV TO TGT-AP

146 DETECT TGT-DEV-TYPE OF TGT-CONN-DEV

148 RETRIEVE MAX SET OF WI-FI ATTRS AND MAX VALUES FOR TGT-DEV-TYPE

150 ANALYZE INTEROPERABILITY BETWEEN TGT-CONN-DEV AND TGT-AP BASED ON MAX SET OF WI-FI ATTRS AND MAX VALUES FOR TGT-DEV-TYPE TO GENERATE INTOP-DATA

152 INSTRUCT TGT-CONN-DEV TO ADAPT TGT-WI-DATA-TX BASED ON INTOP-DATA

154 DETECT CONFIG OF TGT-CONN-DEV OF TGT-DEV-TYPE AND TGT-AP AS CAUSING ISSUE OR CUSTOMER CONTACT

156 COLLECT BETA TEST RESULT FOR CONFIG OF TGT-CONN-DEV OF TGT-DEV-TYPE AND TGT-AP

158 APPLY SW UPDATE FOR TGT-AP BASED ON INTEROP-DATA

160 REPORT PREVALENCE OF TGT-CONN-DEV OF TGT-DEV-TYPE

162 DEFINE CUSTOMER SEGMENT FOR USER OF TGT-CONN-DEV

FIG. 1B

200 CONN-DEV
290
204
280
222 LAN
292
230 AP
102
252
CYB-CLIENT
294
224 WAN
274
240
TGT-WEBS
254
CYB-SERVER
258
WI-FI DB
256 COMP-RES

FIG. 2

230 AP
252 CYB-CLIENT
256 COMP-RES
254 CYB-SER
200 CONN-DEV
240 TGT-WEBS
102 MONITOR WI-DATA-TX
110 EXTRACT SET OF WI-FI ATTRS AND VALUES
114 GENERATE MAX SET OF WI-FI ATTRS AND MAX VALUES
122 MONITOR CERT-WI-DATA-TX FROM CERT-CONN-DEV TO CERT-AP
124 RECOGNIZE CERT-DEV-TYPE OF CONN-DEV AS SPEC-DEV-TYPE
126 STORE ACTIVE VALUES OF ACTIVE SET OF WI-FI ATTRS OF CERT-CONN-DEV IN RELATION TO MAX SET OF WI-FI ATTRS AND MAX VALUES OF SPEC-DEV-TYPE
144 MONITOR TGT-WI-DATA-TX
146 DETECT TGT-DEV-TYPE
148 RETRIEVE MAX SET
150 ANALYZE INTEROPERABILITY TO GENERATE INTOP-DATA
152 INSTRUCT TGT-CONN-DEV TO ADAPT TGT-WI-DATA-TX BASED ON INTOP-DATA
154 DETECT CONFIG CAUSING ISSUE OR CUSTOMER CONTACT
156 COLLECT BETA TEST RESULT
158 APPLY SW UPDATE FOR TGT-AP
160 REPORT PREVALENCE
162 DEFINE CUSTOMER SEGMENT

FIG. 3

400 CYBERSEC-APPAR
402 PROCESSOR
404 MICROPROCESSOR
406
INSTRUCTIONS
408 MEMORY
412
MEDIUM
410
COMP-PROG

FIG. 4A

400 CYBERSEC-APPAR
402 PROCESSOR
408 MEMORY
422 ASIC
424 FPGA
420 CIRCUITRY

FIG. 4B

200 DEV
500
UI
502
PROCESSOR
506
WIRELESS TRX
508
SENSORS
504
MEMORY
256 COMP-RES
602
PROCESSOR
604
MEMORY
606
NETWORK IF
280
230 CPE
700
WIRELESS-TRX
702 PROCESSOR
252
CS-CLIENT
706 NW-IF
704
MEMORY
280
230 CPE
710 WLAN-ROUTER
700
WIRELESS TRX
702A PROCESSOR
252
CS-CLIENT
704A
MEMORY
726
IF
720 MODEM
706 NW-IF
702B PROCESSOR
704B
MEMORY

FIG. 5

FIG. 6

FIG. 7A

FIG. 7B

200
CONN-DEV
230
AP
800
BROADCAST
802
BEACON
804
NETWORK
DISCOVERY
806
PROBE REQUEST
808
PROBE RESPONSE
810
AUTHENTICATION
812
AUTHENTICATION
814
AUTHENTICATION
816
ASSOCIATION
818
ASSOCIATION REQUEST
820
ASSOCIATION RESPONSE
900
902
904
906
908
910
912
914
FRAME-CNTL
DURATION
DA
SA
BSSID
SEQ-CNTL
FRAME-BODY
FCS
806
SSID
SUPP-RATES
HT-CAPA
VHT-CAPA
916
918
920
922

FIG. 8

FIG. 9

1000 DEVICE L2 MGMT FRAMES

INPUT

INPUT

INPUT

1002 LIVE INFERENCE

1006 FINGERPRINTING MODEL

1008 CLUSTERING ALGORITHM

RESULT

RESULT

RESULT

1010 CAPABILITIES LISTING FROM L2 MGMT FRAMES

1012 CAPABILITIES FROM DEVICE FINGERPRINT

1014 CAPABILITIES FROM WI-FI CHIPSET CLUSTER

1016 COMBINE RESULTS

API OUTPUT

FIG. 10

1002
LIVE INFERENCE
1006
FINGERPRINTING
MODEL
1008
CLUSTERING
ALGORITHM

FIG. 11

Europäisches
Patentamt
European
Patent Office
Office européen
des brevets

# EUROPEAN SEARCH REPORT

Application Number
EP 24 18 6973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/007929 A1 (SENDEROVITZ RAN [IL] ET AL) 3 January 2019 (2019-01-03) | 1,3-5,7, 10,12, 16-18 | INV. H04W8/22 H04W84/12 |
| Y | * paragraph [0026]; figure 1 * | 13,14 | |
| A | * paragraph [0032] - paragraph [0040]; figure 1 * <br> * paragraph [0048] - paragraph [0050] * <br> * paragraph [0059] * <br> * paragraph [0085] * <br> * paragraph [0127] * <br> ----- | 2,15 | |
| X | EP 3 928 483 B1 (AOIFE SOLUTIONS S L [ES]) 25 January 2023 (2023-01-25) | 1,3-6,8, 9,11, 16-18 | |
| A | * paragraph [0009] - paragraph [0013] * <br> * paragraph [0018] - paragraph [0021]; figure 1 * <br> * paragraph [0026] - paragraph [0027] * <br> * paragraph [0031] - paragraph [0039]; figures 4-5 * <br> ----- | 2,15 | |
| Y | US 2017/048728 A1 (NGO TERRY F K [US] ET AL) 16 February 2017 (2017-02-16) <br> * paragraph [0058]; figure 8 * <br> ----- | 13,14 | TECHNICAL FIELDS SEARCHED (IPC) <br> H04W |

The present search report has been drawn up for all claims

| Place of search | Date of completion of the search | Examiner |
|---|---|---|
| Munich | 21 December 2024 | Stefanis, Dimitrios |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 18 6973

This annex lists the patent family members relating to the patent documents cited in the above-mentioned European search report. The members are as contained in the European Patent Office EDP file on The European Patent Office is in no way liable for these particulars which are merely given for the purpose of information.

21-12-2024

| Patent document cited in search report | Publication date | Patent family member(s) | Publication date |
|---|---|---|---|
| US 2019007929 A1 | 03-01-2019 | NONE | |
| EP 3928483 B1 | 25-01-2023 | EP 3928483 A1 | 29-12-2021 |
| | | ES 2942861 T3 | 07-06-2023 |
| | | US 2022167123 A1 | 26-05-2022 |
| | | WO 2021104657 A1 | 03-06-2021 |
| US 2017048728 A1 | 16-02-2017 | NONE | |

EPO FORM P0459

For more details about this annex : see Official Journal of the European Patent Office, No. 12/82